# EUROPÄISCHE PATENTSCHRIFT

(11) **EP 0 374 435 B1**
(45) Veröffentlichungstag und Bekanntmachung des Hinweises auf die Patenterteilung: **01.09.1993**
(21) Anmeldenummer: 89119944.0
(22) Anmeldetag: 27.10.1989
(51) Int. Cl.: C09J 193/00

(54) **Klebharzteilchen und Verfahren zu ihrer Herstellung**
Adhesive particles and process for their preparation
Particules d'adhésif et procédé pour leur préparation

(30) Priorität: 17.12.1988 DE 3842613
(43) Veröffentlichungstag der Anmeldung: 27.06.1990
(73) Patentinhaber: Continental Aktiengesellschaft, 30165 Hannover (DE)
(72) Erfinder: Menting, Karl-Hans, Dr., D-3050 Wunstorf 1 (DE); Stevens, Hendrik, Dr., D-3000 Hannover 21 (DE)

(56) Entgegenhaltungen:
- EP-A- 0 115 307
- GB-A- 1 048 797

## Beschreibung

Die Erfindung betrifft Klebharzteilchen aus Klebharz mit einem Erweichungsbereich zwischen 60° und 120°, insbesondere für die Kautschukverarbeitung, sowie ein Verfahren zu ihrer Herstellung.

Aus der EP-A 115 307 ist ein Verfahren bekannt, bei dem das Zusammenbacken von Klebharzteilchen durch Coating mit einer Emulsion von hochmolekularem Polyolefin herabgesetzt wird. Die Klebharzschmelze wird in eine wässrige Dispersion von Polyethylenwachs als Antiklebmittel eingebracht. Das Coaten erfolgt durch oberflächliches Aufschmelzen des Polyethylenwachs auf das Klebharz. Außerdem wird das Pulver-coating zum gleichen Zwecke offenbart, wobei die Oberfläche nur teilweise geschützt ist.

Bei der Kautschukverarbeitung kommen als Klebharzzusätze Kolophonium und Tallharze zum Einsatz. Das Kolophonium wird dabei üblicherweise in Blechfässern angeliefert, während Tallharz in großen Brocken bzw. Klumpen in Säcken abgefüllt vorliegt. Beim Aufbrechen der Fässer ergibt sich der Nachteil, daß Metallteilchen in die Kautschukmischungen gelangen können. Sowohl beim Kolophonium als auch beim Tallharz besteht aber vor allem der Nachteil, daß beide Klebharze als Zuschlagstoffe für eine Kautschukmischung nur einer Handabwiegung zugänglich sind. Weiterhin ist es bei Klebharzen mit höheren Erweichungstemperaturen, z.B. bei Phenolharzen und Kohlenwasserstoffharzen bereits bekannt, sie in Pastillenform zu erzeugen.

Im Rahmen der Automatisierung der Kautschukmischungsproduktion ist es wünschenswert, alle Klebharze in automatisch verwiegbarer Form vorliegen zu haben. Der Erfindung liegt deshalb die Aufgabe zugrunde, automatisch verwiegbare Klebharzteilchen sowie ein Verfahren zu ihrer Herstellung anzugeben.

Diese Aufgabe wird erfindungsgemäß dadurch gelöst, daß die Klebharzteilchen in Form gecoateter Teilchen vorliegen und daß dem Klebharz zum Coaten zumindestens ein Polyethylen-Hartwachs mit einem Erstarrungspunkt ≧ 90°C zugesetzt ist. Ein Verfahren zur Herstellung der Klebharzteilchen ist dadurch gekennzeichnet, daß einer Klebharzschmelze unter Inertgasatmosphäre ein Polyethylen-Hartwachs zugesetzt wird, daß die so erzeugte Masse einer Pastilliervorrichtung zugeführt wird und daß auf der Pastilliervorrichtung unter Abkühlung der Masse aus Klebharz und PE-Hartwachs gecoatetes Klebharz in Pastillenform erzeugt wird.

Durch das erfindungsgemäße Coaten der Klebharzteilchen wird vor allem der Vorteil erzielt, daß auch nach längerer Lagerung der Teilchen selbst bei erhöhten Lagertemperaturen im Sommer ein Anbacken der Teilchen nicht mehr vorkommt, so daß eine exakte automatische Verwiegung der Teilchenzusätze bei der Herstellung einer Kautschukmischung gewährleistet ist. Selbst die erhöhten Drücke bei der Lagerung von mehreren auf Paletten übereinander geschichteten Säcken bewirken kein Anbacken der Teilchen in den unteren Säcken. Gegenüber dem heutigen Zustand, bei dem das harte und spröde Kolophonium beim Zerbrechen Staubprobleme und Feuergefährlichkeit erzeugt, sind die gecoateten Kolophoniumteilchen in der Fabrik problemlos handhabbar. Ein weiterer Vorteil der Erfindung besteht darin, daß ein Zerkleinern von Kolophonium oder Tallharz mit der damit verbundenen Oberflächenvergrößerung und der daraus resultierenden Oxydation, d.h. Verminderung der Klebwirkung, nicht mehr stattfindet.

Nachfolgend wird ein Ausführungsbeispiel für das Verfahren zur Herstellung von Klebharzteilchen näher erläutert. Zunächst wird Kolophonium mit einem Erweichungsbereich zwischen 60° und 120° unter Inertgasatmosphäre, z.B. Stickstoffatmosphäre, die eine Oxydation verhindert, bei Temperaturen zwischen 100° und 140°C geschmolzen. Unter Rühren wird anschließend Polyethylen-Hartwachs mit einem Erstarrungspunkt ≧ 90°C in einer Dosierung von ca. 2 Gew.-% zugesetzt, das sich in der Schmelze auflöst. Anschließend wird die so erzeugte Masse einer Pastilliermaschine zugeführt, mit der unter Abkühlung gecoatete Klebharzpastillen erzeugt werden. Über eine Druck- und Viskositätsänderung kann die gewünschte Größe der Pastillen eingestellt werden. Dabei wird die Viskosität der geschmolzenen Masse über die Temperatur gesteuert. Die Masseteilchen werden durch Öffnungen im äußeren Mantel der Pastilliermaschine gedrückt und fallen auf ein gekühltes Edelstahlband, an dessen Ende gecoatete Klebharzpastillen vorliegen, die auf ca. 50°C heruntergekühlt sind. Während des Abkühlens auf dem Band scheidet sich das in der Masse vorhandene Polyethylen-Hartwachs auf der Oberfläche der Pastillen ab, so daß ein späteres Anbacken der Pastillen zuverlässig verhindert wird. Die Pastillen weisen einen Durchmesser von ca. 8 mm und eine Dicke von ca. 4 mm auf. Mit dieser kleinen Teilchengröße läßt sich das Kolophonium als Zuschlagstoff für eine Kautschukmischung hervorragend exakt automatisch verwiegen.

Das beschriebene Herstellungsverfahren kann sinngemäß auch für die Herstellung von Klebharzteilchen auf der Basis von Tallharz, von Hohlenwasserstoff-Harzen (C5-oder C9-Basis) und von Phenolharzen, jeweils mit einer Erweichungstemperatur zwischen 60° und 120°C angewandt werden. Als Zusätze kommen lineare oder verzweigte PE-Hartwachse in einer Dosierung von 0,5 bis 6 Gew.-% in Frage. Die Pastillierung erfolgt bei Temperaturen zwischen 90° und 140°C. Um eine automatische Verwiegbarkeit mit einer Wiegegenauigkeit von wenigen Gramm zu gewährleisten, sollten die Klebharzteilchen eine mittlere Teilchengröße von weniger als 15 mm aufweisen.

Gemäß einem weiteren Herstellungsverfahren wird die Schmelze aus dem Klebharz und dem zugefügten PE-Hartwachs auf einem gekühlten Metallband ausgegossen, so daß es in einer dünnen Schicht mit gecoateter Oberfläche vorliegt. Durch anschließendes Brechen erhält man Klebharzteilchen in sogenannter Flake-Form.

Versuche haben gezeigt, daß die erfindungsgemäß erzeugten gecoateten Klebharzteilchen bei einer längeren Lagerung unter Druck und unter Temperaturen bis 50°C keinerlei Zusammenbacken zeigten. Auch wurden bei einer damit erzeugten Kautschukmischung keine Nachteile hinsichtlich Klebrigkeit und Vulkanisateigenschaften festgestellt.

## Patentansprüche

1. Klebharzteilchen aus Klebharz mit einem Erweichungsbereich zwischen 60° und 120°C, insbesondere für die Kautschukverarbeitung, **dadurch gekennzeichnet,** daß sie in Form gecoateter Teilchen vorliegen und daß dem Klebharz zum Coaten zumindestens ein Polyethylen-Hartwachs mit einem Erstarrungspunkt ≧ 90°C zugesetzt ist.

2. Klebharzteilchen nach Anspruch 1, dadurch gekennzeichnet, daß dem Klebharz ein lineares oder verzweigtes PE-Hartwachs in einer Dosierung von 0,5 bis 6 Gew.-% zugesetzt ist.

3. Klebharzteilchen nach Anspruch 1, dadurch gekennzeichnet, daß es in Pastillenform mit einer mittleren Teilchengröße von weniger als 15 mm vorliegt.

4. Klebharzteilchen nach Anspruch 1, dadurch gekennzeichnet, daß als Klebharz Kolophonium oder Tallharz vorliegt.

5. Verfahren zur Herstellung von Klebharzteilchen nach Anspruch 1, dadurch gekennzeichnet, daß einer Klebharzschmelze unter Inertgasatmosphäre ein Polyethylen-Hartwachs zugesetzt wird, daß die so erzeugte Masse einer Pastilliervorrichtung zugeführt wird und daß auf der Pastilliervorrichtung unter Abkühlung der Masse aus Klebharz und PE-Hartwachs gecoatetes Klebharz in Pastillenform erzeugt wird.

6. Verfahren nach Anspruch 5, dadurch gekennzeichnet, daß das Schmelzen des Klebharzes und das Einrühren des PE-Harzes unter Stickstoffatmosphäre geschieht.

7. Verfahren nach Anspruch 5, dadurch gekennzeichnet, daß einer Kolophonium- oder Tallharzschmelze bis zu 2 Gew.-% PE-Hartwachs zugesetzt wird.

8. Verfahren zur Herstellung von Klebharzteilchen nach Anspruch 1, dadurch gekennzeichnet, daß einer Klebharzschmelze unter Inertgasatmosphäre ein Polyethylen-Hartwachs zugesetzt wird, daß die so erzeugte Masse auf einem gekühlten Metallband ausgebreitet wird und das Material anschließend zur Erzeugung von Flakes gebrochen wird.

## Claims

1. Adhesive resin particles, formed from adhesive resin having a softening range of between 60° and 120°C, more especially for the processing of rubber, characterised in that they are in the form of coated particles, and in that at least one polyethylene hard wax, having a setting point equal to or greater than 90°C, is added to the adhesive resin for coating purposes.

2. Adhesive resin particle according to claim 1, characterised in that a linear or branched PE hard wax is added to the adhesive resin in a dosage of 0.5 to 6 % by wt.

3. Adhesive resin particle according to claim 1, characterised in that it is in pastille form with an average particle size of less than 15 mm.

4. Adhesive resin particle according to claim 1, characterised in that rosin or tall resin is the adhesive resin.

5. Method of producing adhesive resin particles according to claim 1, characterised in that a polyethylene hard wax is added to a melt of adhesive resin in an inert gas atmosphere, in that the mass which is thus produced is supplied to a pastille-making device, and in that coated adhesive resin is produced in pastille form on the pastille-making device, and the mass of adhesive resin and PE hard wax is thereby cooled.

6. Method according to claim 5, characterised in that the melting of the adhesive resin and the stirring-in of the PE hard wax occur in a nitrogen atmosphere.

7. Method according to claim 5, characterised in that up to 2 % by wt. PE hard wax is added to a melt of rosin or tall resin.

8. Method of producing adhesive resin particles according to claim 1, characterised in that a polyethylene hard wax is added to a melt of adhesive resin in an inert gas atmosphere, in that the mass which is thus produced is spread over a cooled strip of metal, and the material is subsequently crushed to produce flakes.

## Revendications

1. Particules de résine adhésive, formées de résine adhésive ayant une plage de ramollissement comprise entre 60° et 120°C, notamment pour la mise en oeuvre de caoutchouc, caractérisées en ce qu'elles se présentent sous une forme de particules revêtues et en ce qu'on ajoute à la résine adhésive, pour le revêtement, au moins une cire dure de polyéthylène ayant un point de solidification supérieur ou égal à 90°C.

2. Particules de résine adhésive selon la revendication 1, caractérisées en ce qu'on ajoute à la résine adhésive une cire dure de polyéthylène linéaire ou ramifiée avec un dosage de 0,5 à 6% en poids.

3. Particules de résine adhésive selon la revendication 1, caractérisées en ce qu'elles se présentent sous la forme de pastilles, avec une grosseur moyenne de particules inférieure à 15 mm.

4. Particules de résine adhésive selon la revendication 1, caractérisées en ce qu'on utilise comme résine adhésive de la colophane ou de la résine d'huile de pin.

5. Procédé de préparation de particules de résine adhésive conformes à la revendication 1, caractérisé en ce qu'on ajoute à un bain fondu de résine adhésive, en opérant sous atmosphère gazeuse inerte, une cire dure de polyéthylène, en ce que la masse ainsi produite est introduite dans un dispositif de formation de pastilles et en ce qu'on produit dans ce dispositif, avec refroidissement de la masse formée de la résine adhésive et de la cire dure de polyéthylène, de la résine adhésive revêtue sous forme de pastilles.

6. Procédé selon la revendication 5, caractérisé en ce que la fusion de la résine adhésive et l'agitation de la résine de polyéthylène sont effectuées sous atmosphère d'azote.

7. Procédé selon la revendication 5, caractérisé en ce qu'on ajoute dans un bain fondu de colophane ou de résine d'huile de pin jusqu'à 2% en poids de cire dure de polyéthylène.

8. Procédé de préparation de particules de résine adhésive selon la revendication 1, caractérisé en ce qu'on ajoute dans un bain fondu de résine adhésive, en opérant sous atmosphère gazeuse inerte, une cire dure de polyéthylène, en ce que la masse ainsi produite est étalée sur une bande métallique refroidie et en ce qu'ensuite la matière est brisée pour produire des paillettes.
